# EUROPEAN PATENT APPLICATION

(11) **EP 4 749 327 A1**
(43) Date of publication of application: **27.05.2026**
(21) Application number: 25212612.3
(22) Date of filing: 31.10.2025
(51) Int. Cl.: G01S 13/86, G01S 13/95, G01S 17/95

(54) **JOINT RADAR/OPTICAL SIGNAL WIND GUST DETECTION SYSTEM**

(30) Priority: 25.11.2024 US 202463724755 P; 06.08.2025 US 202519292024
(71) Applicant: Honeywell International Inc., Charlotte, NC 28202 (US)
(72) Inventor: DOBBINS, Thomas, Charlotte, 28202 (US); DRASAL, Zbynek, Charlotte, 28202 (US)
(74) Representative: Haseltine Lake Kempner LLP

(57) **Abstract**

Systems and methods for a joint radar/optical signal wind gust detection system are described herein. In certain embodiments, a system includes an optical system (213) mounted to an aircraft configured to provide optical wind measurements from a volume of space along a direction of travel for the aircraft. Further, the system includes a radar system (211) mounted to the aircraft configured to provide radar wind measurements from the volume of space along the direction of travel for the aircraft. Also, the system includes processors that receive the optical wind measurements from the optical system and the radar wind measurements from the radar system, wherein the processors are configured to characterize wind gusts within the volume of space by fusing the optical wind measurements with the radar wind measurements, wherein fusion of the optical wind measurements with the radar wind measurements is based on weather conditions within the volume of space.

## Description

### CROSS-REFERENCE TO RELATED APPLICATIONS

This application claims benefit of U.S. Provisional Patent Application No. 63/724,755, filed on November 25, 2024, and titled "JOINT RADAR/OPTICAL SIGNAL WIND GUST DETECTION SYSTEM," the content of which are incorporated herein in their entirety.

### BACKGROUND

During aircraft travel, air movement can affect the efficiency and safety of aircraft operations. For example, wind gusts and turbulence can force aircraft operators to make rapid adjustments in response to external forces on the aircraft, leading to increased fuel consumption and structural stresses. Additionally, turbulence can pose safety risks to passengers within the aircraft. Aircraft operators may attempt to characterize air movement that could affect the aircraft, enabling operators to respond efficiently and proactively to the air movement.

### SUMMARY

Systems and methods for a joint radar/optical signal wind gust detection system are described herein. In certain embodiments, a system includes an optical system mounted to an aircraft configured to provide optical wind measurements from a volume of space along a direction of travel for the aircraft. Further, the system includes a radar system mounted to the aircraft configured to provide radar wind measurements from the volume of space along the direction of travel for the aircraft. Also, the system includes one or more processors configured to receive the optical wind measurements from the optical system and the radar wind measurements from the radar system, wherein the one or more processors are configured to characterize wind gusts within the volume of space by fusing the optical wind measurements with the radar wind measurements, wherein fusion of the optical wind measurements with the radar wind measurements is based on weather conditions within the volume of space.

### BRIEF DESCRIPTION OF DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a diagram of an aircraft passing through different environments according to an aspect of the present disclosure;
FIG. 2 is a block diagram of a wind gust alleviation system according to an aspect of the present disclosure;
FIG. 3 is a block diagram of an optical system for detecting wind gusts according to an aspect of the present disclosure;
FIG. 4 is a block diagram of a radar system for detecting wind gusts according to an aspect of the present disclosure; and
FIG. 5 is a flowchart diagram of a method for detecting wind gusts according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

In certain embodiments, systems and methods for a joint radar/optical signal wind gust detection system are provided. In particular, a wind gust alleviation system for a vehicle traveling in a particular direction may receive wind gust detection signals from both radar detection systems and optical detection systems. The wind gust alleviation system may then fuse the information from the radar detection systems and the optical detection systems to characterize wind gusts along the direction of travel. As radar signals and optical signals are subject to different environmental constraints, receiving both signals allows the wind gust alleviation system to consistently determine wind conditions as the vehicle passes through various environmental conditions.

Wind gusts can affect the operation of aircraft. In particular, wind gusts can stress aircraft structures, affect fuel efficiency, and potentially threaten the security of aircraft passengers. However, aircraft operators, such as pilots or autonomous control systems, can mitigate the threats posed by wind by identifying wind conditions ahead of the aircraft and adjusting the operation of the aircraft in response to the anticipated effects of identified future wind conditions. For example, the aircraft can avoid areas with certain wind gusts, adjust aircraft structures (such as ailerons) to reduce stresses on the aircraft from wind-caused forces and adjust flight speeds in response to anticipated wind conditions, among other adjustments. Mitigating anticipated wind conditions has multiple potential benefits. For example, flights may be smoother because aircraft can avoid turbulence caused by wind gusts. Additionally, aircraft may be designed to be lighter because aircraft are not exposed to the same forces caused by wind. Furthermore, as aircraft can be lighter and some winds can be avoided, flights can be more efficient, resulting in significant fuel savings for aircraft operators.

To identify future wind conditions, sensors can be mounted on an aircraft to help sense the wind conditions ahead of the aircraft. For example, optical sensors, such as lidar, may be used to detect the movement of air particles. Thus, optical sensors can be mounted on aircraft, enabling the aircraft systems to utilize the optical sensors to identify wind conditions ahead of the aircraft. However, lidar systems may struggle to detect wind conditions in different environmental conditions. For example, lidar systems may struggle to identify wind conditions in cloudy conditions. As aircraft would need to be able to identify wind conditions in almost all environments to provide some of the benefits of wind mitigation, using lidar systems alone may be insufficient to provide adequate knowledge of future wind conditions.

In certain embodiments, multiple sensors are deployed on an aircraft, including sensors of different types that can measure wind conditions under various environmental conditions. For example, the multiple sensors include an optical sensing system (such as lidar), which can measure wind conditions in clear air conditions. Additionally, the multiple sensors include a radar system that can measure wind conditions in cloudy air conditions. Accordingly, multiple sensors may be mounted on an aircraft to provide measurements of wind conditions within a certain distance in front of the aircraft along a direction of travel. Furthermore, the aircraft may include computational devices that analyze and fuse measurements from multiple sensors to provide a measurement of wind conditions.

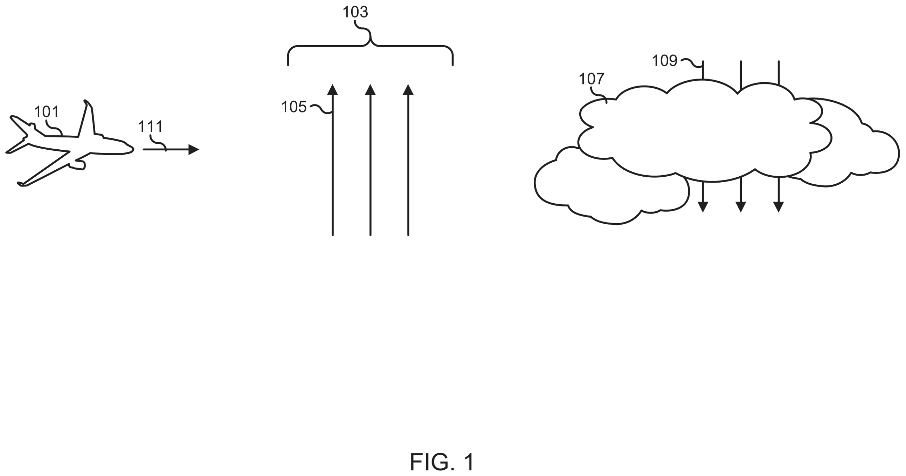

FIG. 1 is a diagram of an aircraft 101 flying through multiple types of atmospheric conditions subject to wind gusts. In particular, the atmospheric conditions include clear air conditions 103 and cloudy conditions 107. As illustrated, the aircraft 101 may be traveling in a travel direction 111. As described herein, the aircraft 101 may be an airplane, a spacecraft, a helicopter, or a similar vehicle. Further, the aircraft 101 may be a manned aircraft or an unmanned aircraft. As described herein, wind gusts refer to changes in wind speeds.

As the aircraft 101 travels along the travel direction 111, the aircraft 101 may potentially experience wind gusts within the clear air conditions 103 and/or the cloudy conditions 107. For example, wind gusts 105 may occur within the clear air conditions 103, and wind gusts 109 may occur within the cloudy conditions 107. Thus, when the aircraft 101 moves along the travel direction 111 through the clear air conditions 103, the wind gusts 105 may exert forces on the aircraft 101 that can affect the efficiency, safety, and experienced structural stress of the aircraft 101. Similarly, when the aircraft 101 moves along the travel direction 111 through the cloudy conditions 107, the wind gusts 109 may also exert forces that can affect the efficiency, safety, and experienced structural stress of the aircraft 101.

In certain embodiments, the aircraft 101 includes at least one sensor capable of detecting the wind gusts 105 within the clear air conditions 103. For example, at least one sensor may be an optical sensor, such as lidar, which emits laser signals into the clear air conditions 103 and then receives the reflected laser signals. In particular, an optical sensor may emit light ahead of the aircraft 101 that is reflected by moving particles within a specific distance ahead of the aircraft 101 in the clear air conditions 103. By detecting the movement of particles, a controller can identify the presence of wind gusts and characterize the identified wind gusts accordingly. The characterization may include determining the speed and direction of wind gusts. However, the optical sensors may be unable to detect the wind gusts 109 accurately in the cloudy conditions 107 due to water vapor in the clouds absorbing and reflecting the light emitted by the optical sensors.

In additional embodiments, the aircraft 101 includes at least one radar sensor that is capable of detecting wind gusts 109 within the cloudy conditions 107. For example, radar sensors may emit radio waves into clouds, where the radio waves can detect the movement of particles throughout the cloudy conditions 107. In particular, the reflected radio waves may be used by a controller to identify the presence of wind gusts and also to characterize the identified wind gusts. However, the radar sensor may be unable to accurately detect the wind gusts 105 in the clear air conditions 103.

In some embodiments, the aircraft 101 may include at least one radar sensor and at least one optical sensor to detect wind gusts in both the clear air conditions 103 and the cloudy conditions 107. In particular, a computational device may receive the measurements from at least one radar sensor and at least one optical sensor and fuse the measurements to provide a unified measurement of wind gusts along the travel direction 111 of the aircraft 101. In some implementations, the sensors acquire measurements of wind conditions within a defined range in front of the aircraft 101 along the travel direction 111. For example, the defined range may be approximately 100-300 meters in front of the aircraft.

In certain embodiments, after characterizing the wind conditions, a wind gust alleviation system may direct the aircraft 101 to perform actions that mitigate the potential adverse effects of wind gusts on the aircraft 101. For example, the wind gust alleviation system may direct the aircraft 101 to change the travel direction 111 to avoid wind gusts. Additionally, the wind gust alleviation system may direct the aircraft 101 to alter positions of aircraft structures, preparing the aircraft 101 to respond more capably to identified wind gusts. For example, the wind gust alleviation system may adjust ailerons, flaps, and speeds, among other components and parameters, to mitigate the impact of wind gusts on the aircraft 101. Because the wind gust alleviation system can mitigate the effects of wind gusts, the aircraft 101 may experience less structural stress during flight. Thus, the aircraft 101 may be designed to be lighter and more fuel-efficient, leading to safer and more efficient flights.

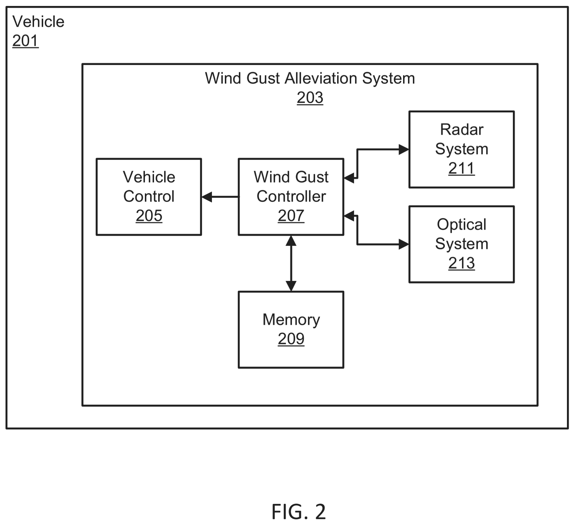

FIG. 2 is a block diagram of a vehicle 201 that includes a wind gust alleviation system 203 that functions in a similar manner as described above. As shown, the wind gust alleviation system 203 includes a wind gust controller 207 that receives measurements from a radar system 211 and an optical system 213. The wind gust controller 207 fuses the measurements from the radar system 211 and the optical system 213 to identify and characterize wind gusts in front of the vehicle 201. Based on the characterized wind gusts, the wind gust controller 207 provides information describing the identified wind gusts to a vehicle control 205. The vehicle control 205 may then control the operation of the vehicle 201 based on the characterization of the identified wind gusts.

In general, the wind gust controller 207 may include any one or more of a processor, microprocessor, a digital signal processor (DSP), an application specific integrated circuit (ASIC), a field programmable gate array (FPGA), or equivalent discrete or integrated logic circuitry. In some example embodiments, the wind gust controller 207 may include multiple components, such as any combination of one or more microprocessors, one or more controllers, one or more DSPs, one or more ASICs, one or more FPGAs, as well as other discrete or integrated logic circuitry. The functions attributed to the wind gust controller 207 herein may be embodied as software, firmware, hardware, or any combination thereof. The wind gust controller 207 may be part of a system controller, component controller, or part of a controller shared with the radar system 211 and the optical system 213 of an air data system.

The wind gust controller 207 may also access data from and write data to a memory 209 to support the operation of the wind gust alleviation system 203. The memory 209 may store computer-readable operating instructions that, when executed by the wind gust controller 207, provide functions of the wind gust alleviation system. The computer-readable instructions may be encoded within the memory. Memory is an appropriate non-transitory storage medium or media including any volatile, non-volatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

In certain embodiments, the wind gust controller 207 is in communication with the radar system 211 and the optical system 213. The wind gust controller 207 may periodically receive measurements of wind gusts from the radar system 211 and the optical system 213. The wind gust controller 207, based on operating instructions stored in memory 209, determines if a wind gust has been detected with data from at least one of the radar system 211 and the optical system 213. If a wind gust has been detected, the wind gust controller 207 instructs the vehicle control 205 to adjust the operation of the vehicle 201 in anticipation of the wind gust, thereby mitigating the effects of the wind gust on the vehicle 201, which can cause passenger discomfort and stress on the vehicle.

To provide the vehicle enough time to compensate for wind gusts it may encounter, the radar system 211 and the optical system 213 may monitor areas of the atmosphere hundreds of meters in front of the vehicle. For example, controllers for the radar system 211 and the optical system 213 (or the wind gust controller 207) may set a time to periodically monitor for returned reflected light beams or radar signals that would provide measurements from the desired distance from the vehicle 201. Additionally, the wind gust controller 207 may use the velocity of the vehicle 201 along the travel direction 111 to determine when to sample the reflected light beam or radar signal. Furthermore, the characteristics of the signal transmission and reception components, as well as the signal power, may be selected based on the distance between the areas of the atmosphere being monitored by the wind gust alleviation system 203.

In certain embodiments, the wind gust controller 207 may fuse the measurements received from the radar system 211 and the optical system 213. In particular, the wind gust controller 207 may execute a data fusion algorithm known to one of skill in the art, which combines the measurements. In some implementations, both the radar system 211 and the optical system 213 may independently provide measurements to the wind gust controller 207. The wind gust controller 207 may determine how to fuse the measurements from the radar system 211 and the optical system 213 based on the information received from the radar system 211 and the optical system 213.

When the radar system 211 and the optical system 213 are providing measurements when the vehicle 201 is in clear air conditions, the radar system 211 may report a lack of measurable wind gusts with a significant level of uncertainty. Conversely, the optical system 213 may generate measurements for the clear air environment across the desired measurement range. Thus, the wind gust controller 207 may determine that the optical system 213 is producing more accurate measurements than the radar system 211.

When the radar system 211 and the optical system 213 are providing measurements when the vehicle 201 is in cloudy conditions, the radar system 211 may provide measurable wind gusts with a sufficient level of uncertainty (for example, a variance). Conversely, in cloudy conditions, the optical system 213 may produce strong signal measurements from a close distance, but as the distance increases, the optical signals weaken and become increasingly inaccurate. Thus, the wind gust controller 207 may be able to determine that the radar system 211 is producing more accurate measurements than the optical system 213.

In certain embodiments, the wind gust controller 207 may determine that measurements from both the radar system 211 and the optical system 213 can be used. Furthermore, when a vehicle 201 moves between regions with clear air conditions and regions with cloudy conditions, the transition between the different regions is generally not abrupt. During these transition regions, the radar system 211 and the optical system 213 may both provide reliable measurements of wind gusts. Additionally, at low altitudes, the air density may be high enough for both the radar system 211 and the optical system 213 to provide reliable measurements of wind gusts. The wind gust controller 207 may determine that measurements from both the radar system 211 and the optical system 213 are usable by cross-checking the measurements against each other

. For example, if the radar system 211 and the optical system 213 provide the same measurement, then the wind gust controller 207 may determine that both measurements are usable for characterizing wind gusts. Also, the wind gust controller 207 may use the reliability of measurements to weigh and/or filter the measurements from the radar system 211 and the optical system 213 when fusing the measurements from the different sensing systems.

In some implementations, the wind gust controller 207 may establish thresholds of certainty for measurements from the radar system 211 and the optical system 213, which are used by the wind gust controller 207 to determine whether the measurements are reliable. For example, the wind gust controller 207 may use predefined variance thresholds for measurements from the radar system 211 and the optical system 213. If the variance for a measurement exceeds a threshold, the wind gust controller 207 may use the measurements to characterize wind gusts. In some implementations, the wind gust controller 207 may use adaptive weights for the measurements based on the variance.

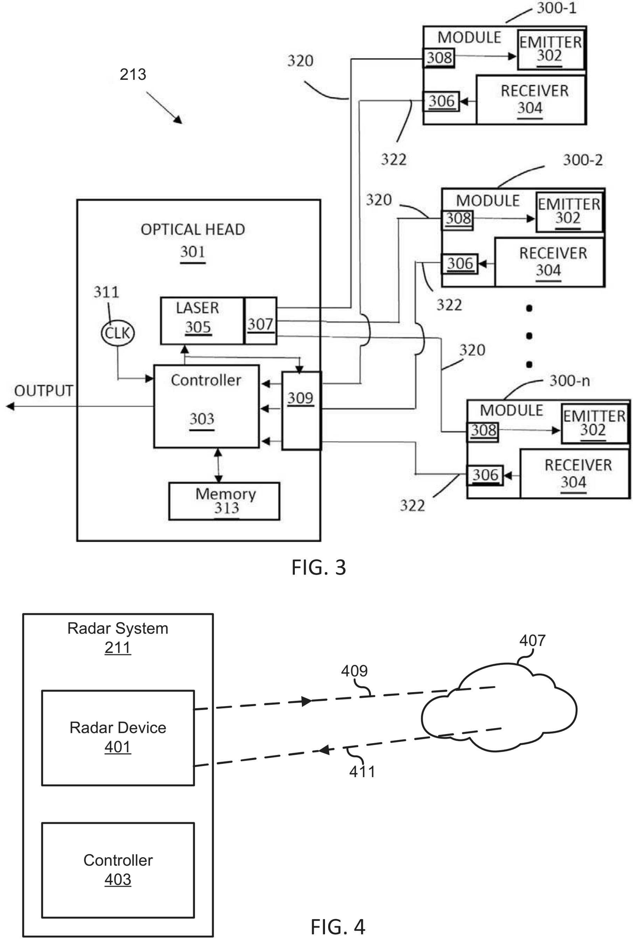

FIG. 3 illustrates a block diagram of an exemplary optical system 213. In some embodiments, the optical system 213 may be modular. As illustrated, the optical system 213 includes an optical head 301, which may include a controller 303 and a memory 313. Similarly, the controller 303 and the memory 313 may be implemented like the wind gust controller 207 and the memory 209, as described above in FIG. 2. In particular, the controller 303 may include any one or more of a processor, microprocessor, a digital signal processor (DSP), an application specific integrated circuit (ASIC), a field program gate array (FPGA), or equivalent discrete or integrated logic circuitry. In some example embodiments, the controller 303 may include multiple components, such as any combination of one or more microprocessors, one or more controllers, one or more DSPs, one or more ASICs, one or more FPGAs, as well as other discrete or integrated logic circuitry. The functions attributed to the controller 303 herein may be embodied as software, firmware, hardware, or any combination thereof. The controller 303 may be part of a system controller or a component controller. The memory 313 may include computer-readable operating instructions that, when executed by the controller 303, provide functions of the optical system 213. The computer-readable instructions may be encoded within the memory. Memory is an appropriate non-transitory storage medium or media including any volatile, non-volatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

In exemplary embodiments, the optical head 301 may include a laser 305 and beam-splitting optics 307. The controller 303 may control the laser 305 to generate pulsed light beams. The beam-splitting optics 307 of the optical head 301 are used to split the light beams into emitted fiber optic paths 320. Each of the emit fiber optic paths 320 is coupled to associated modules 300-1, 300-2 through 300-n. Each of the emit fiber optic paths 320 may provide a generated signal path for the generated light beams. Each module 300-1 through 300-n may be generally referred to as "module 300."

Each module 300 includes an input interface 308 or input connector that is coupled to an associated emit fiber optic path 320 and an emitter 302 that is optically coupled to the input interface 308. The emitter 302 includes transmitting optics configured to direct the generated laser beam from the laser 305 into the atmosphere in a desired direction. Reflected light beams are reflected off particles in the atmosphere and are received by the receiver 304, which includes telescope optics to direct the returned reflected light beam. The reflected light beams are optically coupled to an output interface 306, such as an output coupler. Each output interface 306 is coupled to an associated reflected fiber optic path 322. Each reflected fiber optic path 322 provides a reflected signal path for the reflected light beams. A detector 309 of the optical head 301 is in communication with each reflected fiber optic path 322. The detector 309 may include an interferometer to at least measure changes in wavelength between the generated light beams and the reflected light beams.

In some embodiments, the optical system 213 may provide multiple lines of sight for periodically detecting wind conditions within a volume along a potential travel direction. For example, the optical system 213 may emit optical signals along two or more lines of sight. In particular, each module 300 may emit multiple lines of sight, or the separate modules 300 may work together to emit optical signals along multiple lines of sight. The optical signals along multiple lines of sight may enable the optical system 213 to measure wind gusts at defined repeating distances (i.e., every 10 meters) between defined distances (such as between 100 meters and 300 meters) in front of the vehicle along a potential direction of travel.

The controller 303 is in communication with the optical detector 309. The controller 303 is configured to process the output of the optical detector 309 to determine air data. The determined air data may include, but is not limited to, wind speed using Doppler shift calculations, temperature based on the broadening of the reflected light beam, and particle density, among others.

In one example, an association between a reflected fiber path 322, an associated module 300, and the direction or location at which the module 300 is configured to monitor is stored in the memory 313. The controller 303 uses the associations when determining air data associated with a specific region of the atmosphere around the aircraft. Further, in an example, separate areas of the detector 309 are each associated with a module 300. The associations are stored in the memory 313 and are used by the controller 303 when determining air data associated with a specific region of the atmosphere around the vehicle.

The optical head 301, in this example, further includes a clock 311. The controller 303 utilizes the clock 311 to measure the time it takes for a pulsed reflected light beam to be received at the optical detector 309 from the time the light beam was generated by the laser 305. Based on the time of travel and the speed of light, the controller 303 can determine not only the air data but also the distance from the aircraft at which the air data was detected. In one example, the controller 303 implements operating instructions stored in the memory 313 to pulse the light beam from the laser 305 and read an output from the detector 309 at a specific time from the pulse using the clock to collect air data at a specific distance from the vehicle in the direction provided by an associated module 300. The controller 303 outputs the air data, which other vehicle systems can use during operation.

FIG. 4 illustrates a conceptual block diagram of a radar system 211 that is mounted onboard a vehicle, such as the vehicle 201 in FIG. 2. The radar system 211 is configured to acquire information about air conditions along potential directions of travel for the vehicle 201. The radar system 211 may include a controller 403 that incorporates weather detection modules for detecting weather conditions in sensed data along the potential directions of travel. The controller 403 may include processing circuitry, such as the wind gust controller 207 described above. Additionally, the controller 403 may communicate with memory devices, such as the memory 209. The controller 403 is configured to acquire measurements of weather conditions from sensed radar data. Additionally, the controller 403 may also calculate reliability information for the acquired measurements, such as variances and similar metrics.

Further, the radar system 211 may include a radar device 401. For example, the radar device 401 may be a phased-array radar device or another type of radar device, along with any associated processing circuitry. The radar device 401 may be configured to transmit radar signals 409 to a volume of space 407 outside the vehicle along a potential direction of travel. In some examples, the transmitted radar signals 409 may be electromagnetic waves at frequencies commonly associated with radar signals. The transmitted radar signals 409 may travel away from the radar device 401 and collide with particles such as water molecules and other particles in the volume of space 407. Some of the transmitted radar signals may be reflected or scattered and returned to the radar device 401 as reflected or scattered radar signals 411. The radar system 211 may also be configured to store information related to the returned radar signals 411 in an incorporated or attached memory device and/or transmit the returned radar signals 411 to the controller 403 or other processing circuitry, such as the wind gust controller 207 in FIG. 2. In some examples, the returned radar signals 411 may indicate the reflectivity of molecules and the presence of wind gusts within the volume of space 407.

The radar device 401 may be configured to transmit and receive signals at a specified frequency or within a frequency band. The radar device 401 may be configured to transmit and receive signals by using an antenna array. In some examples, the antenna array may include a one-dimensional line of antennas and/or a two-dimensional matrix of antennas. The radar device 401 may be configured to control the direction of a beam transmitted by the antenna array by controlling the phase shift across the antenna array. In some examples, the radar device 401 may be configured to scan the volume of space 407 in a relatively short amount of time, such as five seconds, two seconds, one second, or less than one second. In contrast, the radar device 401, with a single mechanical scanning element, may scan the same volume of space 407 in a much longer period.

In additional embodiments, the radar system 211 may also include other components not depicted in FIG. 4, such as a user interface configured to receive user inputs and present weather information and/or information relating to conditions within the volume of space 407. Also, the radar system 211 may include one or more memory devices for storing data related to conditions within the volume of space 407. Accordingly, the radar system 211 may provide measurements of weather conditions that can be fused with optical data from the optical system 213 by the wind gust controller 207, as described above.

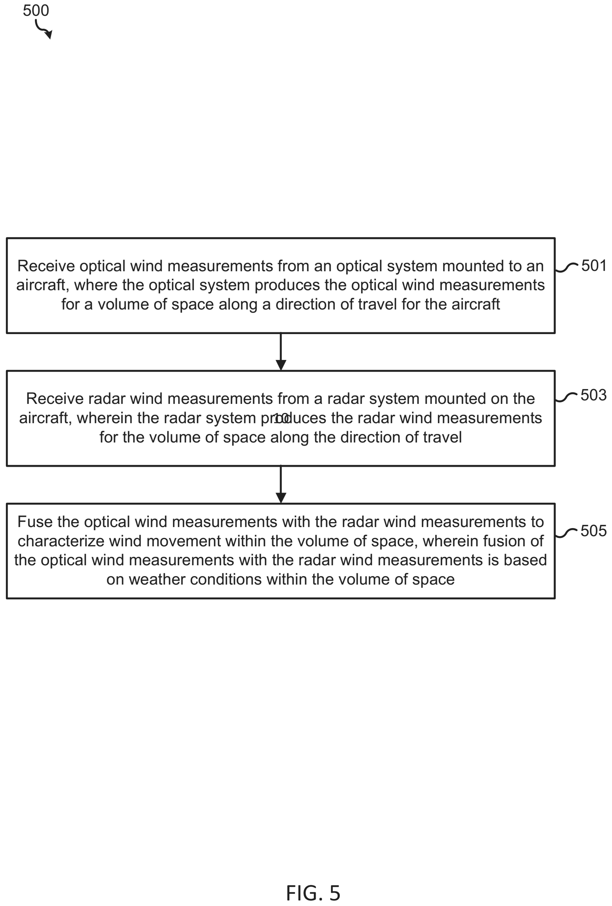

FIG. 5 is a flowchart diagram of a method 500 for a joint radar/optical signal wind gust detection system. The method 500 proceeds at 501, where optical wind measurements are received from an optical system mounted to an aircraft, where the optical system produces the optical wind measurements for a volume of space along a direction of travel for the aircraft. Further, the method 500 proceeds at 503, where radar wind measurements are received from a radar system mounted on the aircraft, wherein the radar system produces the radar wind measurements for the volume of space along the direction of travel. Also, the method 500 proceeds at 505, where the optical wind measurements are fused with the radar wind measurements to characterize wind movement within the volume of space, wherein fusion of the optical wind measurements with the radar wind measurements is based on weather conditions within the volume of space.

### Example Embodiments

Example 1 includes a system comprising: an optical system mounted to an aircraft configured to provide optical wind measurements from a volume of space along a direction of travel for the aircraft; a radar system mounted to the aircraft configured to provide radar wind measurements from the volume of space along the direction of travel for the aircraft; and one or more processors configured to receive the optical wind measurements from the optical system and the radar wind measurements from the radar system, wherein the one or more processors are configured to characterize wind gusts within the volume of space by fusing the optical wind measurements with the radar wind measurements, wherein fusion of the optical wind measurements with the radar wind measurements is based on weather conditions within the volume of space.

Example 2 includes the system of Example 1, wherein the volume of space is within a defined range along the direction of travel.

Example 3 includes the system of Example 2, wherein optical system characteristics and radar system characteristics are selected based on the defined range.

Example 4 includes the system of any of Examples 1-3, wherein the one or more processors are further configured to direct the aircraft to perform one or more actions to mitigate potential adverse effects based on the characterized wind gusts.

Example 5 includes the system of Example 4, where the one or more actions comprises at least one of: changing the direction of travel; and altering positions of aircraft structures.

Example 6 includes the system of any of Examples 1-5, wherein the one or more processors is further configured to determine that the optical wind measurements are usable and the radar wind measurements are usable by cross-checking the optical wind measurements against the radar wind measurements.

Example 7 includes the system of any of Examples 1-6, wherein the one or more processors are configured to fuse the optical wind measurements with the radar wind measurements by determining whether the optical wind measurements are reliable and the radar wind measurements are reliable based on at least one threshold of certainty.

Example 8 includes the system of Example 7, wherein the at least one threshold of certainty comprises: a variance threshold; and an adaptive weight based on the variance threshold.

Example 9 includes the system of any of Examples 1-8, further comprising a user interface configured to receive the weather conditions from a user.

Example 10 includes a method comprising: receiving optical wind measurements from an optical system mounted to an aircraft, wherein the optical system produces the optical wind measurements for a volume of space along a direction of travel for the aircraft; receiving radar wind measurements from a radar system mounted on the aircraft, wherein the radar system produces the radar wind measurements for the volume of space along the direction of travel; and fusing the optical wind measurements with the radar wind measurements to characterize wind movement within the volume of space, wherein fusion of the optical wind measurements with the radar wind measurements is based on weather conditions within the volume of space.

Example 11 includes the method of Example 10, wherein the volume of space is within a defined range along the direction of travel.

Example 12 includes the method of Example 11, wherein optical system characteristics and radar system characteristics are selected based on the defined range.

Example 13 includes the method of any of Examples 10-12, further comprising directing the aircraft to perform one or more actions to mitigate potential adverse effects based on the characterized wind movement.

Example 14 includes the method of Example 13, where the one or more actions comprises at least one of: changing the direction of travel; and altering positions of aircraft structures.

Example 15 includes the method of any of Examples 10-14, further comprising determining that the optical wind measurements are usable and the radar wind measurements are usable by cross-checking the optical wind measurements against the radar wind measurements.

Example 16 includes the method of any of Examples 10-15, wherein fusing the optical wind measurements with the radar wind measurements further comprises determining whether the optical wind measurements are reliable and the radar wind measurements are reliable based on at least one threshold of certainty.

Example 17 includes the method of Example 16, wherein the at least one threshold of certainty comprises: a variance threshold; and an adaptive weight on the variance threshold.

Example 18 includes the method of any of Examples 10-17, further comprising receiving the weather conditions through a user interface.

Example 19 includes a system comprising: an optical system mounted to an aircraft configured to provide optical wind measurements from a volume of space along a direction of travel for the aircraft; a radar system mounted to the aircraft configured to provide radar wind measurements from the volume of space along the direction of travel for the aircraft; and one or more processors configured to: receive the optical wind measurements from the optical system and the radar wind measurements from the radar system; characterize wind gusts within the volume of space by fusing the optical wind measurements with the radar wind measurements, wherein fusion of the optical wind measurements with the radar wind measurements is based on weather conditions within the volume of space; and direct the aircraft to perform one or more actions to mitigate potential adverse effects based on the characterized wind gusts.

Example 20 includes the system of Example 19, wherein the one or more processors are further configured to fuse the optical wind measurements with the radar wind measurements by determining whether the optical wind measurements are reliable and the radar wind measurements are reliable based on at least one threshold of certainty.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
an optical system (213) mounted to an aircraft configured to provide optical wind measurements from a volume of space along a direction of travel for the aircraft;
a radar system (211) mounted to the aircraft configured to provide radar wind measurements from the volume of space along the direction of travel for the aircraft; and
one or more processors configured to receive the optical wind measurements from the optical system (213) and the radar wind measurements from the radar system (211), wherein the one or more processors are configured to characterize wind gusts within the volume of space by fusing the optical wind measurements with the radar wind measurements, wherein fusion of the optical wind measurements with the radar wind measurements is based on weather conditions within the volume of space.

2. The system of claim 1, wherein the volume of space is within a defined range along the direction of travel, wherein optical system characteristics and radar system characteristics are selected based on the defined range.

3. The system of claim 1, wherein the one or more processors are further configured to direct the aircraft to perform one or more actions to mitigate potential adverse effects based on the characterized wind gusts, wherein the one or more actions comprises at least one of:
changing the direction of travel; and
altering positions of aircraft structures.

4. The system of claim 1, wherein the one or more processors is further configured to determine that the optical wind measurements are usable and the radar wind measurements are usable by cross-checking the optical wind measurements against the radar wind measurements.

5. The system of claim 1, wherein the one or more processors are configured to fuse the optical wind measurements with the radar wind measurements by determining whether the optical wind measurements are reliable and the radar wind measurements are reliable based on at least one threshold of certainty, wherein the at least one threshold of certainty comprises:
a variance threshold; and
an adaptive weight based on the variance threshold.

6. A method comprising:
receiving optical wind measurements from an optical system mounted to an aircraft, wherein the optical system (213) produces the optical wind measurements for a volume of space along a direction of travel for the aircraft;
receiving radar wind measurements from a radar system (211) mounted on the aircraft, wherein the radar system (211) produces the radar wind measurements for the volume of space along the direction of travel; and
fusing the optical wind measurements with the radar wind measurements to characterize wind movement within the volume of space, wherein fusion of the optical wind measurements with the radar wind measurements is based on weather conditions within the volume of space.

7. The method of claim 6, wherein the volume of space is within a defined range along the direction of travel, wherein optical system characteristics and radar system characteristics are selected based on the defined range.

8. The method of claim 6, further comprising directing the aircraft to perform one or more actions to mitigate potential adverse effects based on the characterized wind movement, wherein the one or more actions comprises at least one of:
changing the direction of travel; and
altering positions of aircraft structures.

9. The method of claim 6, further comprising determining that the optical wind measurements are usable and the radar wind measurements are usable by cross-checking the optical wind measurements against the radar wind measurements.

10. The method of claim 6, wherein fusing the optical wind measurements with the radar wind measurements further comprises determining whether the optical wind measurements are reliable and the radar wind measurements are reliable based on at least one threshold of certainty, wherein the at least one threshold of certainty comprises:
a variance threshold; and
an adaptive weight on the variance threshold.
